# EUROPEAN PATENT SPECIFICATION

(11) **EP 1 570 556 B1**
(45) Date of publication and mention of the grant of the patent: **09.07.2008**
(21) Application number: 03786400.6
(22) Date of filing: 09.12.2003
(51) Int. Cl.: H02B 1/36

(54) **WITHDRAWABLE UNIT FOR SWITCHGEAR**
GERÄTEEINSCHUB FÜR SCHALTANLAGE
INSTALLATION SECONDAIRE UTILISABLE DANS UN EQUIPEMENT D'INSTALLATION ELECTRIQUE

(30) Priority: 09.12.2002 NL 1022118; 11.06.2003 NL 1023642
(43) Date of publication of application: 07.09.2005
(73) Proprietor: Eaton Electric B.V., 7559 SC Hengelo (NL)
(72) Inventor: EVERINK, Jacobus, Michael, NL-7623 CN Borne (NL)
(74) Representative: van Westenbrugge, Andries
(86) International application number: PCT/NL2003/000869
(87) International publication number: WO 2004/054056

(56) References cited:
- EP-A- 1 089 408
- EP-A- 1 137 137
- DE-A- 19 511 648
- DE-U- 9 005 067

## Description

### Technical field

The present invention relates to an easily removable sub-installation for use in electrical installation equipment, according to the preamble of claim 1. Electrical installation equipment generally comprises cabinets in which the sub-installations can be installed. The electrical components comprise, for example, switches, relays, fuses, circuit breakers, etc.

In a further aspect the present invention relates to a method for the production of a sub-section for use in a sub-installation according to the present invention.

### Prior art

European patent application EP-A-1 137 137 discloses an adapter for an electrical installation cabinet, with a sub-section having a height of about a minimum dimension of a component to be installed.

German patent application DE-A-195 11 648 describes a method for producing a sub-section for use in an electrical installation cabinet.

German Patent publication DE-A 195 23 592 describes low-voltage switchgear. The equipment described comprises a large number of sub-installations, each of which must be able to interrupt the power supply for various types of electrical consumers, such as motors, heating elements and the like, which usually take a large amount of current during operation. To this end the subinstallations can be constructed as drawers, which can be installed above one another in the switchgear, which is usually housed in one or more cabinets. So as also to be able to accommodate additional electrical components, for example, for protection or control, in addition to the switch for switching on and off the main power supply, a compartment consisting of a front wall, rear wall and two side walls is made. The switch and any other components are then fixed to the rear wall or one of the side walls, optionally with the aid of subframes.

This construction has the disadvantage that a large vertical space is taken up in the cabinet, as a result of which fewer sub-installations can be installed in said cabinet and, thus, the total power that can be switched per cabinet is also reduced. Furthermore, this construction has the disadvantage that the installation of the components and the wiring both for the main power supply and for connecting the components in the sub-installation to one another is difficult and time-consuming because the switch and the components are not easily accessible from all sides. In addition, the baseplate, the side walls and the at least one sub-section are fixed to one another with the aid of screw fasteners, which in the case of a switching installation consisting of several cabinets and the multiplicity of subinstallations installed therein demands a great deal of assembly time. The installation, but also any subsequent adaptation of switchgear is therefore also associated with high labour costs.

### Summary of the invention

The present invention therefore seeks to provide a sub-installation where the space in the installation is utilised as effectively as possible (maximum amount of switched power per unit floor surface area, or cabinet capacity) and where fixing of the components and installation of the wiring can take place easily and rapidly.

This objective is achieved by a sub-installation of the type defined in the preamble, having the features of the characterising part of claim 1.

In general, the smallest dimension will be the width of the component and the latter will thus be so mounted that the side runs parallel to the surface of the baseplate. By fixing the components in this way as low as possible a construction height of the pull-out module, and thus optimisation of the switched power of the installation equipment, is made possible. For fixing components there is usually a standardised fixing that enables rapid mounting of components on the DIN section.

In a further embodiment, the sub-installation comprises a multiplicity of sub-sections that can be fixed to the baseplate parallel to one another. By making use of multiple subsections, the installation depth of the pull-out module is also utilised as efficiently as possible, as a result of which multiple components can be accommodated in the subinstallation for a constant installation depth.

In a further embodiment, the at least one sub-section is fixed to the side walls such that it can be removed. This can, for example, be implemented in that the at least one subsection has a flange at the ends, which flange can be inserted in a cut-out in the side wall.

The cut-out can, for example, be half the height of the side wall, with a width that corresponds to the thickness of the sub-section, as a result of which fixing in a fixed position in the sub-installation is achieved in a simple manner. This embodiment simplifies mounting of the components in the pull-out module and the installation of the wiring in that the sub-sections can be removed for mounting of components, as a result of which these are easily accessible from all sides. After installing components and wiring, the subsections are then put back into the side walls.

For mounting of the sub-section on the baseplate, the at least one sub-section has at least one fixing body at right angles to the sub-section. The fixing body can be, for example, a flanged part provided with an opening that can be fixed to the baseplate by a screw fastener, such as a parker. As an alternative, the fixing body can extend over the entire length of the sub-section, as a result of which an L-shaped sub-section is produced.

To simplify mounting of components and wiring, in a further embodiment the at least one sub-section is provided with at least one body projecting in the same direction as the fixing body on an opposing side of the at least one fixing body. As a result the sub-section can easily be placed upright, which simplifies the mounting of components. As an alternative, the projecting body is present over the entire length of the sub-section, as a result of which the sub-section has a U shape. This U shape also makes it possible to accommodate therein the wiring between the components mounted on said sub-section.

Frequently it is necessary to connect the wiring from the components on the one sub-section to components on another sub-section or also to feed it through a substantial part of the sub-installation in order to take wiring outside the sub-installation, for example via the contacts on an adapter body for the sub-installation. In order to make this possible, in a further embodiment the at least one sub-section is provided with at least one cable opening, for example openings on the side opposite the baseplate (in the assembled state).

In yet a further embodiment the pull-out module has an adapter body that can be fixed to the baseplate to provide predefined electrical connections between the sub-installation and a part of the electrical installation equipment that is of fixed construction, the adapter body being constructed as a sub-section. A saving in costs is achieved by using the same standard parts for the sub-sections on which components are mounted and the adapter body.

The sub-installation constructed as a drawer and also the sub-section used therein can easily be produced from metal, for example by punching and bending operations on a metal sheet. As an alternative, the sub-section can be produced from plastic, such as glass fibre reinforced polyester. Production can then take place by means of a simple one-step casting process (in/out method).

In a further embodiment, the sub-section can be formed from a blank from a sheet material.

In a further aspect, the present invention relates to a method of the type defined in the preamble, having the characterising features as defined in claim 11.

This method of production of the sub-section is very fast (only a few bending operations in the same direction) and cost-effective. The bending operations can be such that the sub-section is provided with a stiffening edge along essentially the entire length of the sub-section. As a result of the stiffening edge, the sub-section can be produced form thinner material, which saves costs and weight. The DIN section can be a closed sheet section with edges on which electrical components can be fitted or a cut-out can also have been made in the sheet section. This embodiment has the advantage that separate mounting of DIN sections (for example with the aid of screws) is superfluous.

In a further embodiment of the present method, the latter further comprises the step of making at least one cut-out in the sheet. In the finished sub-section the cut-out can, for example, serve as a cable passage. The cut-outs can, for example, be made rapidly and effectively by punching or another cutting operation.

In a further embodiment, the method can be carried out in such a way that two subsections are formed from one sheet. This is even more efficient in terms of cost and time and has the additional advantage that a cable duct is formed directly between the two subsections.

### Brief description of the drawings

The present invention will be explained below with reference to the appended drawings, in which:
Fig. 1 shows a plan view of a pull-out module according to one embodiment of the present invention with electrical components installed therein;
Fig. 2 shows a side view of a sub-section as used in the pull-out module in Fig. 1;
Fig. 3 shows a side view of a side wall as used in the pull-out module in Fig. 1;
Fig. 4 shows a plan view of a sheet before forming a double sub-section; and
Fig. 5 shows a perspective view of a double sub-section that has been produced from the sheet shown in Fig. 4.

### Detailed description of embodiments of the invention

The sub-installation 10, hereinafter designated pull-out module 10, according to the present invention is preferably used in electrical installation equipment, such as motor control centres, that is used to control low-voltage installations, such as power distribution installations, lighting, motor controls and the like. This installation equipment is provided with, in general, several pull-out modules 10 in which electrical components 17 for control and/or protection purposes are accommodated, such as switches, fuses and the like. The pull-out modules 10 are equipped for installing between a power supply section of the installation equipment that supplies electrical power and an output section of the installation equipment. The output section is connected to the devices to be controlled, such as electric motors or lighting installations.

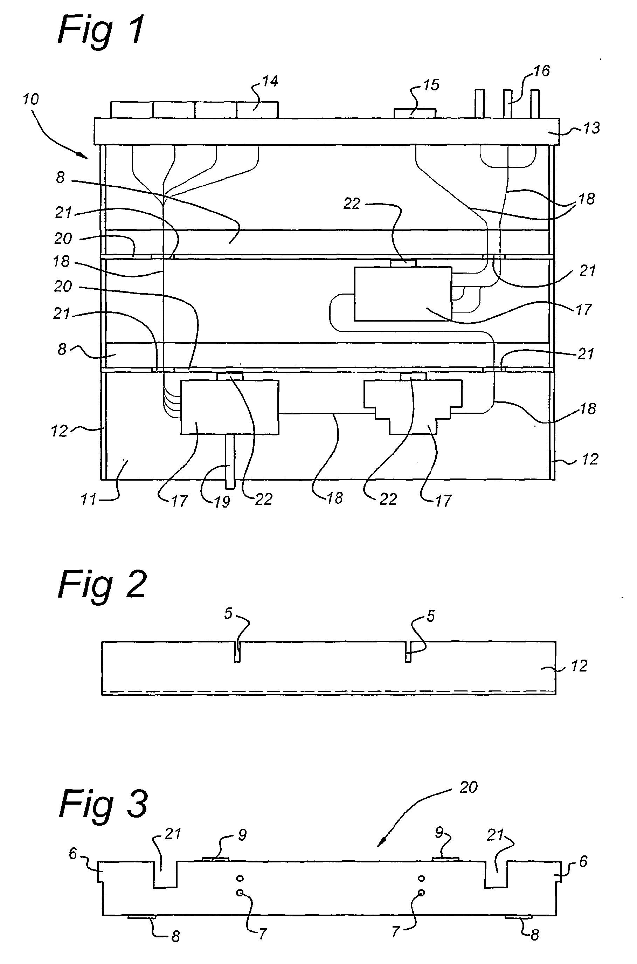

Fig. 1 shows a plan view of a pull-out module 10 according to the present invention. The pull-out module 10 comprises a baseplate 11, to which two side walls 12 are attached. The pull-out module 10 also has an adapter body 13, which is fitted at the rear (for example by a screw fastener or a snap-fit connector), in general also perpendicular to the surface of the baseplate 11. The adapter body 13 is provided with various types of connections that correspond to associated contacts in the installation equipment. For instance, the adapter body 13 can have contacts 14 for making electrical contact with the power supply section (in general three phases plus a neutral conductor), contacts 15 for making electrical contact with an internal rail system (for connecting to other pull-out modules 10) and contact 16 for making contact with the output section of the electrical installation equipment. The pull-out module 10 can be slid into the electrical installation equipment, often in the form of a cabinet, the contacts 14, 15, 16 making contact with the associated contacts in the electrical installation equipment in the operational position. A hinged door of a certain height, which screens off the pull-out module 10, is attached to the front of the cabinet. There can be holes in the door to allow the passage of operating elements (such as switch shaft 19), so that the associated knobs and the like can be fitted on the operating elements when the door is closed, and for, for example, panel instruments.

A multiplicity of electrical components 17, such as switches, relays, fuses, automatic circuit breakers and the like, can be installed in the pull-out module 10. These components 17 are frequently made by suppliers and in the majority of cases have a specific standardised form (for example fixed dimensions, positions of connections, fixing means). These components are being further miniaturised to an increasing extent. In order to be able to install as many components 17 as possible in a pull-out module 10 that is a shallow as possible, the pull-out module 10 contains one or more sub-sections 20, which are installed parallel to one another perpendicularly to the surface of the baseplate 11.

The size of the sub-section 20 in the direction perpendicular to the surface of the baseplate 11 essentially corresponds to the smallest dimension of the components 17. The construction height of the pull-out module 10 is kept to a minimum by installing the components 17 lying down in the pull-out module 10.

Of course, account must be taken of the possible evolution of heat in the pull-out module 20. The bulk of the heat generated is caused by the components 17 and the power switched by these. It is found that in practice pull-out modules 20 are frequently used for which the switched power is below 11 kW. The pull-out module 20 according to the present invention offers adequate heat sinking for this purpose.

Fig. 2 shows a side view of a side wall 12 of the pull-out module 10. The side wall 12 (and the corresponding side face 12 on the other side of the baseplate 11) is provided with a number of cut-outs 5 at the top. The number of cut-outs 5 corresponds to the number of sub-sections 20 that it is possible to install. The distance between the cut-outs 5 can be variable to enable flexible distribution of the sub-sections 20.

A view of a sub-section 20 as used in the present invention is shown in Fig. 3. The sub-section 20 is provided at its ends with a flange 6, by means of which the sub-section 20 can be fitted in a fixed position in the side walls 12.

The sub-section 20 is provided with fixing holes 7 in certain positions. The components 17 can be fixed directly to these or standardised fixing means 22, such as DIN rails, can be fixed by means of these holes. The components 17 are frequently standardised components that can be fixed quickly and easily using such DIN rails 22.

The sub-section 20 is furthermore provided with one or more fixing bodies 8, which are perpendicular to the surface of the sub-section 20 and by means of which the sub-section can be fixed to the baseplate 11. This can be effected, for example, by means of simple screw fasteners (for example parkers). The fixing body can extend over the entire length of the sub-section 20, as a result of which the sub-section has an L shape in cross-section.

In an advantageous embodiment the sub-section 20 is provided on the side located opposite the fixing bodies 8 with one or more projections 9 which extend in the same direction as the fixing bodies 8. These projections 9 can also extend over the entire length of the sub-section 20, as a result of which the sub-section 20 has a U shape.

The sub-sections 20 are preferably provided with one or more cable openings 21 which make it possible for wiring 18 (see Fig. 1) to be fed through the entire pull-out module 20.

This is particularly advantageous when assembling the pull-out module 20. With existing systems of pull-out modules the components must, for example, all be fixed directly or via subframes to a rear wall or the side walls of the pull-out module. The installation of the components 17 and the installation of wiring in the pull-out module is then made more difficult because good access is not possible from all conceivable directions.

The pull-out module 20 according to the present invention presents a solution to this. When assembling the pull-out module 20 the sub-sections 20 are first individually provided with the components 17 (optionally via the DIN rails 22). The wiring 18 (see Fig. 1) between the individual components 17 and between the components 17 and the contacts 14, 15, 16 can then be installed, during which operation all components are accessible from all sides. As soon as all components 17 and wiring 18 has been installed, the sub-sections 20 can be slid into their position in the side walls 12 and fixed to the baseplate 11 by means of the fixing bodies 8.

In a further embodiment, the adapter body 13 can also have been made as a sub-section 20 with a corresponding fixing to the side walls 12 and the baseplate 11.

The sub-sections 20 can be produced from metal, which enables simple production by stamping and bending. As an alternative, the sub-sections 20 can be produced from plastic or cast lightweight metal. In this case, as a result of the shape of the sub-sections, use can be made of simple one-step casting moulds (in/out casting method) without complex intermediate moulds.

As a result of the flexible nature of the electrical installation equipment it is optionally possible to replace a pull-out module 10 according to the present invention (with half the construction height compared with conventional pull-out modules) by other pull-out modules 10 with a different construction height.

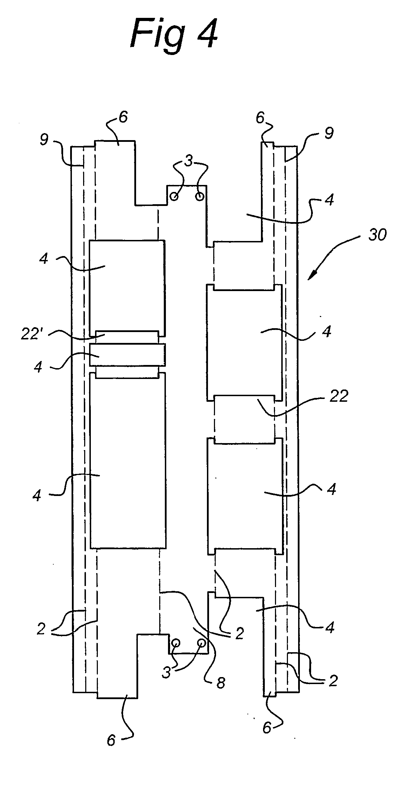

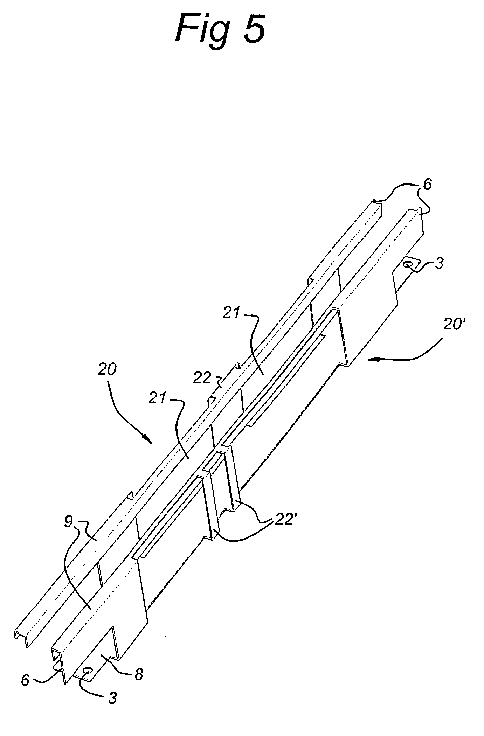

According to the present invention the sub-section 20 can be produced in a simple and inexpensive manner from a sheet 30. A plan view of a sheet 30 from which a double sub-section 20, 20' can be formed by a few simple bending or folding operations is shown in Fig. 4. In Figs 4 and 5 elements which have the same function as in the other figures are indicated by the same reference numerals.

The sheet 30 is provided with a number of cut-outs 4, for example by punching operations, which cut-outs 4 lead to various functional elements in the finished sub-section. The sheet 30 is also provided with a number of bend lines 2 running parallel to the longitudinal direction of the sheet 30. In the example shown in Fig. 4 there are six bend lines 2.

The cut-outs 4 and bend lines 2 are made in such a way that after a number of bending operations the double sub-section 20 as is shown in perspective view in Fig. 5 is produced. A DIN section 22 with a closed sheet section (high strength) has been produced on the one sub-section 20, whilst a DIN section 22' with an opening therein (for example for feeding through cables or for cooling) has been formed on the other sub-section 20'. This has the advantage that the mounting of individual DIN sections 22 can be dispensed with.

Cable passages 21 have been produced from further cut-outs 4. The flanges 6 by means of which the sub-section 20 can be placed in a fixed position in the side walls 12 have been produced from yet further cut-outs 4.

The double profile 20 also comprises a fixing body 8 for mounting the double sub-section 20 on the baseplate 11. For this purpose the fixing body 8 is, for example, provided with a number of mounting holes 3.

As a result of forming a double sub-section in a number of bending operations, a cable duct is automatically produced between the two sub-sections 20, for example with a width of 20 mm.

As indicated in Figs 4 and 5, the double sub-section 20, 20' is provided with projections in the form of stiffening edges 9. This makes it possible to use thinner material for the sheet 30, which is more cost-effective.

It will be clear to those skilled in the art that variants of the double (or single) sub-section 20 that are suitable for use in a pull-out module 10 are possible by different choices for the cut-outs 4 and parallel bend lines 2.

## Claims

1. Sub-installation for use in electrical installation equipment, comprising a baseplate (11), two side walls (12) that are arranged essentially at right angles to the surface of the baseplate and at least one sub-section (20) to which electrical components (17) can be fixed and that can be fixed essentially at right angles to the surface of the baseplate (11), in which the size of the sub-section (20) at right angles to the surface of the baseplate essentially corresponds to a smallest dimension of the electrical components (17),
**characterized in that** the at least one sub-section (20) is provided with integrated DIN rail sections (22,22').

2. Sub-installation according to claim 1, wherein the sub-installation comprises a multiplicity of sub-sections (20) that can be fixed to the baseplate (11) parallel to one another and perpendicular to the side walls (12).

3. Sub-installation according to Claim 1 or 2, wherein the at least one sub-section (20) is fixed to the side walls (12) such that it can be removed.

4. Sub-installation according to Claim 3, wherein the at least one sub-section (20) has a flange (6) at the ends, which flange (6) can be inserted in a cut-out (5) in the side wall (12).

5. Sub-installation according to one of the preceding claims, wherein the at least one sub-section (20) has at least one fixing body (8) at right angles to the sub-section for mounting the at least one sub-section (20) on the baseplate (11).

6. Sub-installation according to Claim 5, wherein the at least one sub-section (20) has at least one body (9) projecting in the same direction as the fixing body on an opposing side of the at least one fixing body (8).

7. Sub-installation according to one of the preceding claims, wherein the at least one sub-section (20) is provided with at least one cable opening (21).

8. Sub-installation according to one of the preceding claims, further comprising an adapter body (13) that can be fixed to the baseplate (11) to provide predefined electrical connections between the sub-installation and a part of the electrical installation equipment that is of fixed construction, the adapter body (13) being constructed as a sub-section.

9. Sub-installation according to one of the preceding claims, wherein the at least one sub-section (20) is produced from metal or plastic.

10. Sub-installation according to one of the preceding claims, wherein the at least one sub-section (20) is formed by a blank from a sheet.

11. Method for the production of a sub-section (20) for use in a sub-installation according to one of Claims 1 to 10, comprising the steps of bending a sheet along a multiplicity of parallel bend lines (2), the gap between two of the multiplicity of parallel bend lines (2) corresponding to the smallest dimension of electrical components that can be installed in the sub-installation, **characterised in that** at least one cut-out (4) is made such that a DIN rail section (22, 22') is produced after bending along the multiplicity of parallel bend lines (2).

12. Method according to Claim 11, further comprising the step of making at least one cut-out (4) in the sheet.

13. Method according to Claim 11 or 12, wherein two sub-sections (20) are formed from one sheet.

## Patentansprüche

1. Unter- bzw. Subinstallation zur Nutzung in einer elektrischen Installationsausrüstung, wobei Folgendes vorgesehen ist:
eine Grundplatte bzw. Basisplatte (11), zwei Seitenwände (12), die im Wesentlichen mit rechten Winkeln zu der Oberfläche zu der Bodenplatte angeordnet sind und wenigstens eine Unter- bzw. Sub-Sektion (20) an der elektrische Komponenten (17) fixiert werden können und die im Wesentlichen in rechten Winkeln zu der Oberfläche der Grundplatte (11) fixiert werden kann, in der die Größe von der Sub-Sektion (20) in rechten Winkeln zu der Oberfläche von der Grundplatte im Wesentlichen einer kleinsten Dimension von den elektrischen Komponenten (17) entspricht, **dadurch gekennzeichnet, dass** die wenigstens eine Sub-Sektion (20) mit integrierten DIN-Schienen-Sektionen (22, 22') versehen ist.

2. Sub-Installation gemäß Anspruch 1, wobei die Sub-Installation eine Vielzahl von Sub-Sektionen (20) aufweist, die an der Grundplatte (11) parallel zueinander und senkrecht zu den Seitenwänden (12) fixiert werden können.

3. Sub-Installation gemäß Anspruch 1 oder 2, wobei die wenigstens eine Sub-Sektion (20) an den Seitenwänden (12) derart fixiert ist, dass sie entfernt werden kann.

4. Sub-Installation gemäß Anspruch 3, wobei die wenigstens eine Sub-Sektion (20) einen Flansch bzw. Kragen (6) an den Enden besitzt, wobei der Flansch (6) in einen Ausschnitt (5) in der Seitenwand (12) eingesetzt werden kann.

5. Sub-Installation gemäß einem der vorhergehenden Ansprüche, wobei die wenigstens eine Sub-Sektion (20) wenigstens einen Fixierkörper (8) in rechten Winkeln zu der Sub-Sektion zum Befestigen der wenigstens einen Sub-Sektion (20) auf der Grundplatte (11) besitzt.

6. Sub-Installation gemäß Anspruch 5, wobei die wenigstens eine Sub-Sektion (20) wenigstens einen Körper (9) besitzt, der sich in die gleiche Richtung erstreckt, wie der Fixierkörper auf einer entgegen gesetzten Seite von dem wenigstens einen Fixierkörper (8).

7. Sub-Installation gemäß einem der vorhergehenden Ansprüche, wobei die wenigstens eine Sub-Sektion (20) mit wenigstens einer Kabelöffnung (21) versehen ist.

8. Sub-Installation gemäß einem der vorhergehenden Ansprüche, die ferner einen Adapter-Körper (13) aufweist, der an der Grundplatte (11) fixiert werden kann, zum Vorsehen vordefinierter elektrischer Verbindungen zwischen der Sub-Installation und einem Teil von der elektrischen Installations-Ausrüstung, die von fixierter Konstruktion ist, wobei der Adapter-Körper (13) als eine Sub-Sektion konstruiert ist.

9. Sub-Installation gemäß einem der vorhergehenden Ansprüche, wobei die wenigstens eine Sub-Sektion (20) aus Metall oder Plastik erzeugt ist.

10. Sub-Installation gemäß einem der vorhergehenden Ansprüche, wobei die wenigstens eine Sub-Sektion (20) durch einen Rohling von einem Blech bzw. einer Folie geformt ist.

11. Verfahren zur Produktion von einer Sub-Sektion (20) zur Nutzung in einer Sub-Installation gemäß einem der Ansprüche 1 bis 10, wobei das Verfahren die Schritte aufweist des Biegens eines Blechs entlang einer Vielzahl von parallelen Biegelinien (2), wobei die Lücke zwischen zwei von der Vielzahl von parallelen Biegelinien (2) der kleinsten Dimension von elektrischen Komponenten entspricht, die in der Sub-Installation installiert werden können, **dadurch gekennzeichnet, dass** wenigstens eine Aussparung (4) derart gemacht wird, dass eine DIN-Schienen-Sektion (22, 22') nach dem Biegen entlang der Vielzahl von parallelen Biegelinien (2) erzeugt wird.

12. Verfahren gemäß Anspruch 11, das ferner den Schritt aufweist des Herstellens wenigstens einer Aussparung (4) in dem Blech.

13. Verfahren gemäß Anspruch 11 oder 12, wobei zwei Sub-Sektionen (20) aus einem Blech gebildet werden.

## Revendications

1. Installation secondaire utilisable dans un équipement d'installation électrique, comprenant un socle (11), deux parois latérales (12) qui sont agencées essentiellement à angles droits par rapport à la surface du socle et au moins une section secondaire (20) à laquelle des composants électriques (17) peuvent être fixés et qui peut être fixée essentiellement à angles droits par rapport à la surface du socle (11), où la taille de la section secondaire (20) à angles droits par rapport à la surface du socle correspond essentiellement à une dimension la plus petite des composants électriques (17), **caractérisée en ce que** la au moins une section secondaire (20) est pourvue de sections de rails DIN intégrées (22, 22').

2. Installation secondaire selon la revendication 1, où l'installation secondaire comprend plusieurs sections secondaires (20) qui peuvent être fixées au socle (11) parallèlement les unes aux autres et perpendiculaires aux parois latérales (12).

3. Installation secondaire selon la revendication 1 ou 2, dans laquelle la au moins une section secondaire (20) est fixée aux parois latérales (12) de manière amovible.

4. Installation secondaire selon la revendication 3, dans laquelle la au moins une section secondaire (20) a une bride (6) aux extrémités, bride (6) qui peut être insérée dans un évidement (5) dans la paroi latérale (12).

5. Installation secondaire selon l'une des revendications précédentes, dans laquelle la au moins une section secondaire (20) possède un corps de fixation (8) au moins à angles droits par rapport à la section secondaire pour le montage de la au moins une section secondaire (20) sur le socle (11).

6. Installation secondaire selon la revendication 5, dans laquelle la au moins une section secondaire (20) possède un corps (9) au moins se projetant dans la même direction que le corps de fixation sur un côté opposé du au moins un corps de fixation (8).

7. Installation secondaire selon l'une des revendications précédentes, dans laquelle la au moins une section secondaire (20) est pourvue d'au moins une ouverture pour câble (21).

8. Installation secondaire selon l'une des revendications précédentes, comprenant en outre un corps adaptateur (13) qui peut être fixé au socle (11) pour procurer des connexions électriques prédéfinies entre l'installation secondaire et une parie de l'équipement d'installation électrique qui est à construction fixe, le corps adaptateur (13) étant construit comme une section secondaire.

9. Installation secondaire selon l'une des revendications précédentes, dans laquelle la au moins une section secondaire (20) est produite à partir d'un métal ou de plastique.

10. Installation secondaire selon l'une des revendications précédentes, dans laquelle la au moins une section secondaire (20) est formée par un flan à partir d'une feuille.

11. Procédé pour la fabrication d'une section secondaire (20) utilisable dans une installation secondaire selon l'une des revendications 1 à 10, comprenant les étapes consistant à plier une feuille le long de plusieurs lignes de pliage parallèles (2), l'espace entre deux parmi les plusieurs lignes de pliage parallèles (2) correspondant à la plus petite dimension de composants électriques qui peuvent être installés dans l'installation secondaire, **caractérisé en ce que** au moins un évidement (4) est fait de sorte qu'une section de rail DIN (22, 22') soit produite après pliage le long des plusieurs lignes de pliage parallèles (2).

12. Procédé selon la revendication 11, comprenant en outre l'étape consistant à faire un évidement (4) au moins dans la feuille.

13. Procédé selon la revendication 11 ou 12, dans lequel deux sections secondaires (20) sont formées à partir d'une feuille.
